# EUROPEAN PATENT SPECIFICATION

(11) **EP 2 059 333 B1**
(45) Date of publication and mention of the grant of the patent: **31.10.2012**
(21) Application number: 07807991.0
(22) Date of filing: 24.08.2007
(51) Int. Cl.: B01D 69/12, B01D 71/56, B01D 67/00, C08G 69/00

(54) **AMINE AQUEOUS SOLUTION FOR FORMING AN ACTIVE LAYER OF POLYAMIDE REVERSE OSMOSIS COMPOSITE MEMBRANE AND PREPARATION METHOD OF POLYAMIDE REVERSE OSMOSIS COMPOSITE MEMBRANE USING THE SAME**
WÄSSRIGE AMINLÖSUNG ZUR BILDUNG EINER AKTIVEN SCHICHT EINER POLYAMID-UMKEHROSMOSEVERBUNDMEMBRAN UND HERSTELLUNGSVERFAHREN DER POLYAMID-UMKEHROSMOSEVERBUNDMEMBRAN MIT DER AMINLÖSUNG
SOLUTION AQUEUSE D'AMINE POUR FORMER UNE COUCHE ACTIVE D'UNE MEMBRANE COMPOSITE POLYAMIDE D'OSMOSE INVERSE ET PROCÉDÉ DE PRÉPARATION DE LA MEMBRANE AVEC LA SOLUTION AQUEUSE D'AMINE

(30) Priority: 07.09.2006 KR 20060086322; 23.08.2007 KR 20070084809
(43) Date of publication of application: 20.05.2009
(73) Proprietor: Woongjincoway Co, Ltd., Chungcheongnam-do 314-895 (KR)
(72) Inventor: KIM, Youn-Kook, Seoul 130-762 (KR); LEE, Sun-Yong, Seoul 151-919 (KR)
(74) Representative: Modiano, Micaela Nadia
(86) International application number: PCT/KR2007/004082
(87) International publication number: WO 2008/030006

(56) References cited:
- WO-A1-2007/013710
- JP-A- 05 015 750
- KR-A- 20010 081 730
- US-A- 3 808 303
- US-A- 5 755 964
- US-B1- 6 245 234
- US-B1- 6 368 507
- KIM J H ET AL: "Composite membranes prepared from poly(m-animostyrene-co-vinyl alcohol) copolymers for the reverse osmosis process", JOURNAL OF MEMBRANE SCIENCE, ELSEVIER SCIENTIFIC PUBL.COMPANY. AMSTERDAM, NL, vol. 216, no. 1-2, 1 May 2003 (2003-05-01) , pages 107-120, XP004422233, ISSN: 0376-7388, DOI: DOI:10.1016/S0376-7388(03)00063-2

## Description

### Technical Field

The present invention relates to an amine aqueous solution for forming an active layer of a polyamide reverse osmosis composite membrane and a preparation method of the polyamide reverse osmosis composite membrane using the same. More particularly, the present invention relates to the amine aqueous solution for forming an active layer of the polyamide reverse osmosis composite membrane having high water permeability and enhanced salt rejection rate by adding alcohol amine and tertiary amine compounds, and a preparation method of the polyamide reverse osmosis composite membrane using the same.

### Background Art

Water and air are indispensable to survival of any form of life on the earth, including human kind, and their availability and quality exert a great influence on the sustenance of the earth as well as humans. With the advance of scientific and industrial development, the applicability of water resources is becoming more and more abundant and water resources are becoming increasingly important. Under the circumstances, acquisition of high-quality water resources is of great concern for the sustenance of lives in many areas around the world. Although the world face scarcity and contamination of water resources and there is a continuously growing need for water supply, available water resources are not readily accessible. According to United Nation's surveys, there are over 120 million people, about one fifth of the global population, have great difficulty in accessing to safe drinking water, and the number of people facing scarcity of sewage treatment facilities has doubled, that is, about 240 million people are drinking poor quality drinking water. Today there are over 300 million people around the world die everyday because of unsanitary drinking water, which results from poorly managed water resources.

Reportedly, over 70% of available water in the world is seawater. However, since sea water contains a great deal of impurities such as salinity or various kinds of salt solids, it cannot be directly used as potable water for industrial, agricultural or home use. Accordingly, in order to allow people to avail themselves of sea water or saline water in a wide variety of areas in their daily lives, desalination is essentially performed to remove various salts from the sea water or saline water. A reverse osmosis composite membrane is essentially used in desalination.

A general reverse osmosis composite membrane comprises a porous polymer support for mechanical strength, and an active layer for separation properties formed on the porous polymer support. In particular, a polyamide active layer is formed by interfacial polymerization, which is reacted a polyfunctional amine with a polyfunctional acyl halide compounds. An exemplary polyamide reverse osmosis composite membrane is described in U.S. Patent No. 4,277,344, which was issued to Cadotte in 1981. According to the above US patent '344, it discloses an aromatic polyamide active layer based on an interfacial polymerization between polyfunctional aromatic amine having at least two primary amine groups and polyfunctional acylhalide having at least three acylhalide groups. According to the above US patent '344, a polysulfone support is submerged in aqueous solution of meta-phenylene diamine, and excess meta-phenylene diamine (MPD) aqueous solution is removed from the surface of the porous polysulfone support. The porous polysulfone support was then covered with a solution of trimesoyl chloride (TMC) dissolved in Freon, so that interfacial polymerization is performed for 10 seconds. The reverse osmosis composite membrane is dried at room temperature after finishing interfacial polymerization. The reverse osmosis composite membrane prepared by the Cadotte method exhibited relatively good flux and good salt rejection performance. Various approaches have been taken thereafter to further improve the flux and salt rejection performance of composite polyamide reverse osmosis membranes.

To date, all reported methods of increasing the water permeability of the conventional polyamide reverse osmosis composite membrane are largely classified into three types as follows: in the first, to use a tertiary amine salt formed by adding a tertiary amine compound and a strong acid in amine aqueous solution; secondly, to add alcohol or a polar aprotic solvent into amine aqueous solution; and thirdly, to perform post-treatment by contacting reverse osmosis composite membrane with acid solution or amine aqueous solution, subsequently, drying it.

The first type method is to perform interfacial polymerization using an aqueous solution having tertiary amine salt, will now be described in detail.

U.S. Pat. No. 4,872,984 (Tomaschke, 1989) discloses a polyamide reverse osmosis membrane formed by interfacial polymerization. The membrane was prepared by contacting amine aqueous solution with an organic solution on a porous support, which the amine aqueous solution comprises a polyfunctional aromatic amine monomer and monomeric amine salt, and the organic solution contains aromatic polyfunctional acylhalide. Here, the monomeric amine salt contained is a tertiary or quaternary amine salt formed by a 3-, or 4-amine compound and a strong acid. Among the tertiary amine compound includes a trialkylamine, such as trimethylamine, triethylamine, tripropylamine; an N-alkylcycloaliphatic amine, such as 1-methylpiperidine; an N,N-dialkylamine, such as N,N-dimethylethylamine and N,N-diethylmethylamine; an N,N-dialkyl ethanolamine, such as N,N-dimethylethanolamine; and so on. Examples of the quaternary amine compound include a tetraalkylammonium hydroxide, such as, tetramethylammonium hydroxide, tetraethylammonium hydroxide; a benzyltrialkylammonium hydroxide, such as benzyltriethylammonium hydroxide, and benzyltripropylammonium hydroxide, and so on. In addition, examples of the strong acid include camphorsulfonic acid, methanesulfonic acid or trifluoroacetic acid.

U.S. Patent No. 6,063,278 (Ja-Young Koo, et al 2000) proposes another preparing method of polyamide reverse osmosis composite membrane. In detail, the membrane was prepared by contacting an organic solution having amine-reactive compound with an amine aqueous solution on a porous support and performing an interfacial polymerization between them. Here, the amine-reactive compound includes a polyfunctional acyl halide, a polyfunctional sulfonyl halide and a polyfunctional isocyanate, and the amine aqueous solution comprises a polyfunctional amine compound, a salt-containing compound having at least one a tertiary amine group or its salt. In the proposed patent, the salt-containing compound is a reaction product of a strong acid and a polyfunctional tertiary amine. Here, the polyfunctional tertiary amine compound has two or more tertiary amine, functional groups, so that some of the tertiary amine functional groups and a strong acid are reacted together to form a tertiary amine salt and the other tertiary amine groups serve as catalysts to facilitate the interfacial polymerization reaction. Examples of the useful polyfunctional tertiary amine compound include N,N,N'N'-tetramethyl-1,3-butanediamine, N,N,N'N'-tetramethyl-1,6-hexanediamine, N,N,N'N'N",-pentamethyldiethylenetriamine, 1,1,3,3-tetramethylguanidine, N,N,N'N'-tetramethylethylenediamine,; and a mixture thereof.

In U.S. Patent No. 6,245,234, issued to Ja-Young Koo, et al. in 2001, there is proposed a polyamide reverse osmosis composite membrane prepared by an interfacial polymerization of a polyfunctional amine and an amine-reactive compounds by contacting an aqueous solution and an organic solution on a porous support, and the aqueous solution comprised water, a polyfunctional amine and reactive product of polyfunctional tertiary amine and an acid, and the organic solution comprised an amine-reactive compound selected from the group consisting of a polyfunctional acyl halide, a polyfunctional sulfonyl halide and a polyfunctional isocyanate. Preferred examples of the polyfunctional tertiary amine compound include N,N,N'N'-tetramethyl-1,6-hexanediamine; N,N,N'N'-tetramethyl-1,4-butanediamine; N,N,N'N'-tetramethyl-2-butene-1,4-diamine; N,N,N'N'-tetramethyl-1,3-butanediamine; N,N,N'N'-tetramethyl-1,3-propanediamine; N,N,N'N'-tetramethyl-1,8-octanediamine; N,N,N'N'-tetramethyl-1,7-heptanediamine; N,N,N'N'-tetramethyl-1,5-pentanediamine; N,N,N'N'-tetraethyl-1,4-butanediamine; N,N,N'N'-tetraethyl-1,3-butanediamine; N,N,N'N'-tetraethyl-1,3-propanediamine; 1,4-dimethylpiperazine; and N,N,N'N'-tetraethylethylenediamine. The polyfunctional tertiary amine and acid compounds are reacted together in a molar ratio that is greater than or equal to 1:0, and is less than 1:1. In the proposed patent, the polyfunctional tertiary amine compound is an alkane having a backbone carbon number ranging from 2 to 10, or a saturated cyclichydrocarbon having a ring member ranging from 3 to 10, and both type of the polyfunctional tertiary amine compound have at least two tertiary amine groups as side chains on the carbon backbone or as a part of the backbone, or as side chains on the ring.

In U.S. Patent No. 6,368,507, issued to Ja-Young Koo, et al. in 2002, there is proposed a method of producing a polyamide reverse osmosis composite membrane by a reaction between an amine aqueous solution and an organic solvent solution, and the amine aqueous solution comprised water, a polyfunctional amine compound, the salt-containing compound comprising at least one tertiary amine salt functional group and at least one tertiary amine functional group and one or more polar solvents, and the organic solvent solution comprised an amine-reactive compound selected from the group consisting of a polyfunctional acyl halide, a polyfunctional sulfonyl halide and a polyfunctional isocyanate. Here, examples of polar solvents suitable for use in the said invention include 2-methoxyethanol, 2-ethoxyethanol, 2-propoxyethanol, 2-butoxyethanol, di(ethylene glycol) t-butylmethyl ether, di(ethylene glycol)hexyl ether, 1,3-hexanediol, 1,3-propanediol, 2-ethyl-1,3-hexanediol, dimethyl sulfoxide, tetramethylene sulfoxide, butyl sulfoxide, methylphenyl sulfoxide, tetramethylene sulfone, butyl sulfone or 1,3-dimethyl-2-imidazolidinone. In addition, examples of the useful polyfunctional tertiary amine include N,N,N'N'-tetramethyl-1,3-butanediamine, N,N,N'N'-tetramethyl-1,6-hexanediamine, N,N,N'N' N"-pentamethyidiethylenetriamine, 1,1,3,3,-tetramethylguanidine, and mixtures thereof.

The second type method in which a polyamide reverse osmosis membrane is prepared by adding alcohol or a polar aprotic solvent to an amine aqueous solution will now be described in detail.

An example of the second type method is disclosed in U.S. Patent No. 5,576,057, issued to Hirose in 1996, describing a reverse osmosis composite membrane having improved water permeability by adding 10∼50 wt % alcohol to a first amine aqueous solution. Here, preferred examples of the alcohol used include ethanol, propanol, butanol, butyl alcohol, 1-pentanol, 2-pentanol, isobutyl alcohol, isopropyl alcohol, 2-ethylbotanol, 2-ethylhexanol, octanol, cyclohexanol, tetrahydrofurfuryl alcohol, neopentyl glycol, t-botanol, benzyl alcohol, 4-methyl-2-pentanol, 3-methyl-2-butanol, pentyl alcohol, allyl alcohol, ethylene glycol, diethylene glycol, triethylene glycol, tetraethylene glycol, propanediol, butanediol, pentanediol, hexanediol, glycerol, and mixtures thereof.

In U.S. Patent No. 4,950,404, issued to Chau et al., there is provide a method for forming a reverse osmosis composite membrane by interfacial polymerization method, in which to a polar aprotic solvent is added to an amine aqueous solution and is prepared to be in contact with an organic solution containing polyfunctional acyl halide on a surface of a support. Here, preferred examples of the polar aprotic solvent suitable for use in the said invention include N-methylpyrrolidone, 2-pyrrolidone, N,N-dimethylformamide, dioxane, pyridine, lutidine, picoline, tetrahydrofuran, sufforan, sulforene, hexamethylphosphoamide, triethylphosphite, N,N-dimethyacetqamide or N,N-dimethypropionamide.

The third type method in which a formed active layer is subjected to post-treatment will now be described in detail.

In U.S. Patent No. 5,755,964, issued to Mickols et al. in 1998, there is proposed a method of increasing water permeability of a reverse osmosis composite membrane. In the proposed method, a polyamide discriminating layer is contacted with an amine compound selected from the group consisting of ammonia; ammonia substituted with 1-3 alkyl groups of C1-C2, the alkyl groups may be further substituted with one or more substituents selected from hydroxy, phenyl, or amino groups; butylamine; cyclohexylamine; 1,6 hexane diamine and mixtures thereof, wherein the concentration of the amine compound is in a range of about 5% to about 100% by weight and the pH of the amine compound is in a range of 7 to 12. The discriminating layer is contacted with the amine compound at a temperature of from about 0 °C to about 130 °C for a period of from about 15 seconds to about 5 days. Examples of the amine compound used herein include trimethylamine, ethanolamine, ammonia, triethanolamine, dimethylamine, N,N-dimethyl ethanolamine, methylamine, ethylenediamine, and mixtures thereof.

In addition, Chau, *et al.* proposed a reverse osmosis composite membrane, as disclosed in U.S. Patent No. 4,983,291. The reverse osmosis composite membrane was prepared through post-treatment performed by contacting reverse osmosis composite membrane with a solution containing an acid such as ascorbic acid, hydrochloric acid, citric acid, sulfamic acid, tartaric acid, ethylenediaminetetraacetic acid, p-toluenesulfonic acid, L-lysine hydrochloride, or glycine, followed by drying the resultant product at a given temperature (ranging from room temperature to 170°C) for a period of time (1 min∼120 min).

The above-described methods of increasing the water permeability of the conventional polyamide reverse osmosis composite membrane can be summarized as follows.

First, water permeability of the polyamide reverse osmosis composite membrane is increased by forming a tertiary amine salt as a reaction product of a tertiary amine and a strong acid in amine aqueous solution. In this case, as the tertiary amines for forming the tertiary amine salt, a monomeric tertiary amine compound and a polyfunctional tertiary amine compound having two or more tertiary amine functional groups are proposed. Specifically, the monomeric tertiary amine compound simply serves to form an amine salt together with a strong acid, whereas the polyfunctional tertiary amine compound forms a tertiary amine salt when one of tertiary amine groups therein by reacting with a strong acid, and acts as a catalyst during interfacial polymerization. These properties of polyfunctional tertiary amine compound differ from that of monomeric tertiary amine compound.

Next, the water permeability of a polyamide reverse osmosis composite membrane can be enhanced by adding alcohol or a polar aprotic solvent to a first amine aqueous solution.

Last, the active layer of a prepared reverse osmosis composite membrane is contacted with a solution containing an acid or amine for post-treatment, thereby increasing the water permeability.

However, none of the above-described proposed methods could enhance both the water permeability and salt rejection rate to desired extents.

Accordingly, in preparing a polyamide reverse osmosis composite membrane having improved water permeability and salt rejection rate, the present invention proposes a novel amine aqueous solution, a preparation method of the polyamide reverse osmosis composite membrane using the amine aqueous solution, and post treatment.

### Disclosure

### Technical Problem

To solve the above problems, it is an object of the present invention to provide an amine aqueous solution for forming an active layer of a polyamide reverse osmosis composite membrane.

It is another object of the present invention to provide method for preparing a polyamide reverse osmosis composite membrane.

### Technical Solution

In order to accomplish the objects, the present invention provides an amine aqueous solution of forming an active layer of a polyamide reverse osmosis composite membrane.

As described in claim 1.

The present invention also provides a method for preparing a polyamide reverse osmosis composite membrane by interfacial polymerization, comprising the steps of;
(1) coating an amine aqueous solution according to claim 1 comprising a polyfunctional amine compound, an alcohol amine compound, a tertiary amine compound, and water on a porous support,
(2) contacting the previously prepared porous support with an organic solution having an amine-reactive compound to form a polyamide active layer on the porous support, wherein the amine-reactive compound is one selected from the group consisting of polyfunctional acylhalide, polyfunctional sulfonyl halide, polyfunctional isocyanate, and a mixture thereof, and
(3) drying it.

Additionally, the method for preparing polyamide reverse osmosis composite membrane is further performed by post-treatment, such as coating, drying or curing using alcohol amine compound.

The polyamide reverse osmosis composite membrane comprises the porous support and a polyamide active layer located on at least one side of the porous support.

In addition, the polyamide reverse osmosis composite membrane comprises a partial cross-linked interfacial structure by curing between alcohol amine compound and polyamide in the polyamide active layer.

### Advantageous Effect

The present invention leads to preparing a polyamide reverse osmosis composite membrane having high water permeability and enhanced salt rejection rate by using alcohol amine and tertiary amine compounds which has not been used as yet.

### Description of Drawings

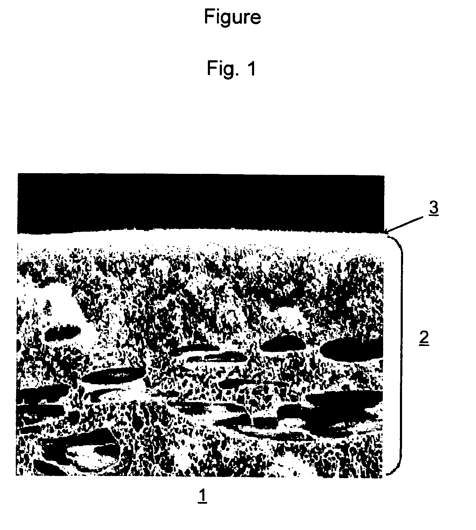

Figure 1 is a scanning electron microscopy (SEM) photograph by illustrating a sectional view of a polyamide reverse osmosis composite membrane prepared in Example 1.

### Best mode

Hereinafter, the present invention will be described in more detail.

In accordance with the present invention, the amine aqueous solution includes alcohol amine and tertiary amine compounds; this has been not used before. The alcohol amine compound forms hydrogen bond between hydroxyl groups within the alcohol amine compound and between hydroxyl group of alcohol amine and tertiary amine compounds, and tertiary amine groups within the alcohol amine and the tertiary amine compound act as a catalyst during interfacial polymerization. Therefore, it enables to prepare a polyamide reverse osmosis composite membrane having high water permeability and enhanced salt rejection rate.

In addition, when the alcohol amine compound is coated on the polyamide active layer and cured, the water permeability of the present polyamide reverse osmosis composite membrane highly increases with high salt rejection due to partial cross-linking effect between hydroxyl group of alcohol amine compound and carboxyl group of polyamide compound.

In accordance with the present invention, the amine aqueous solution for forming polyamide active layer comprises 0.1 to 20 wt % of a polyfunctional amine compound, 0.1 to 20 wt % of an alcohol amine compound, 0.1 to 20 wt % of a tertiary amine compound, and 40 to 99.7 wt % of water.

A general reverse osmosis composite membrane includes a porous polymer support for mechanical strength of the reverse osmosis composite membrane and a polyamide active layer located on the polymer support for separation properties. The polyamide active layer is formed by interfacial polymerization reaction on the porous support by contacting an amine aqueous solution containing a polyfunctional amine with organic solution containing amine-reactive compound.

The amine aqueous solution of the present invention comprises alcohol amine and tertiary amine compounds as additives. The alcohol amine compoun used for the coating, which contains a tertiary amine functional group and a hydroxyl group, is one selected from members represented by formulae (1) through (2) below: 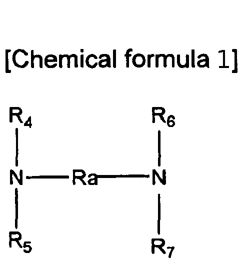 (In the chemical formula 1,
R₄ to R₇ are the same or different, and are each independently a straight or branched alkyl group of C1-C10, aryl group of C6-C10, cycloalkyl group of C3-C10, -XR', or -R"XR"', wherein X is one selected from the group consisting of -O-, -SO₂-, -CO-, -S-, -CF₂- and a combination thereof, and R', R" and R"' are the same or different, and are each independently a straight or branched alkyl group of C1-C10, straight or branched alkylene group of C1-C10, aryl group of C6-C10, cycloalkyl group of C3-C10, or a combination thereof;
Ra is one selected from the group consisting of a straight or branched alkylene group of C1-C10, aryl group of C6-C10, cycloalkyl group of C3-C10, -XR', or -R"XR"', wherein X is one selected from the group consisting of -O-, -SO₂-, -CO-, -S-, -CF₂- and a combination thereof, and R', R" and R"' are the same or different, are each independently a straight or branched alkyl group of C1-C10, straight or branched alkylene group of C1-C10. aryl group of C6-C10, cycloalkyl group of C3-C10, or a combination thereof;
wherein at least one of R₄ to R₇ is substituted by OH) 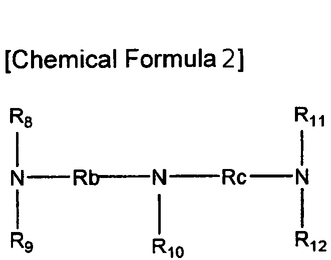 (In the chemical formula 2,
R₈ to R₁₂ are the same or different, are each independently a straight or branched alkyl group of C1-C10, aryl group of C6-C10, cycloalkyl group of C3-C10, -XR', or -R"XR"', wherein X is one selected from the group consisting of -O-, -SO₂-, -CO-, -S-, -CF₂- and a combination thereof, and R', R" and R"' are the same or different, are each independently a straight or branched alkyl group of C1-C10, straight or branched alkylene group of C1-C10, aryl group of C6-C10, cycloalkyl group of C3-C10, or a combination thereof;
Rb to Rc are the same or different, are each independently a straight or branched alkylene group of C1-C10, aryl group of C6-C10, cycloalkyl group of C3-C10, -XR', or -R"XR"', wherein X is one selected from the group consisting of -O-,
-SO₂-, -CO-, -S-, -CF₂- and a combination thereof, and R', R" and R"' are the same or different, are each independently a straight or branched alkyl group of C1-C10, straight or branched alkylene group of C1-C10, aryl group of C6-C10, cycloalkyl group of C3-C10, or a combination thereof;
whrein at least one of R₈ to R₁₂ is substituted by OH.)

Here, the alcohol amine compound as additive is selected from the group consisting of 2,2',2"-nitrilotriethanol, 2,2'-ethyliminodiethanol, 2-diethylamino ethanol, 2-diisopropylaminoethanol, N,N,N'N'-tetrakis-(2-hydroxypropyl) -ethylenediamine, N,N,N'N'-tetrakis-(2-hydroxyethyl)-ethylenediamine, N,N,N'N'N"-pentakis-(2-hydroxypropyl)-diethylenetriamine, N-phenyldiethanol amine, 2-(N-ethylanilino)-ethanol, 2,2'-(4-methylphenylimino)-diethanol, 1,1'-((3-(dimethylamino)-propyl)-imino)-bis-2-propanol, N-tert-butyidiethanolamine, bis-(2-hydroxyethyl)-amino-tris-(hydroxymethyl)-methane, 2-((2-(dimethylamino)-ethyl)-methylamino)-ethanol, 2-((2-(2-(dimethylamino)-ethoxy)-ethyl)-methylamino)-ethanol, 2,4,6-tris-(dimethylaminomethyl)-phenol, 3-dimethylamonophenol, 2-[2-(dimethylamino)-ethoxy]-ethanol, 1-(2-hydroxyethyl)-piperidine, 1-methyl-3-pyrroldiol, 1-aziridinethanol, tropine, N-methyl-3-pipelidinol, 4-(2-hydroxylethyl)-morphorine, 1-(2-hydroxyethyl)-pyrrolidine, 1-methyl-2-pyrrolidinethanol, N-methyl-4-piperidinol, 3-(dimethylamino)-1,2-propanediol, N,N-dimethylcyclohexanol amine, (N,N-dimethyl)-naphthol amine, (N,N-dimethyl)-phenolamine, and a mixture thereof.

In accordance with the present invention, the content of alcohol amine compound in amine aqueous solution is 0.1 to 20 wt%. When the content is less than the above range, the above-mentioned effects are not enough. Conversely, when the content exceeds the above range, the salt rejection rate is decreased.

In the present invention, the conventional tertiary amine compound may be used as the tertiary amine compound of the present invention. The preferable tertiary amine compound of the present invention includes a tertiary amine compound having alkane group of C1-C10 as side chains, to improve abilities of forming a hydrogen bond combined with a hydroxyl group in the alcohol amine compound and of serving as a reaction catalyst. More preferable amine compound of the present invention includes a trialkylamine such as trimethylamine, triethylamine, tripropylamine, tributylamine, and a mixture thereof.

The content of tertiary amine compound in amine aqueous solution is 0.1 to 20 wt%, preferably 0.5 to 5 wt%. When the content is less than the above range, the above-mentioned effect are not enough. Conversely, when the content exceeds the above range, the salt rejection rate is decreased due to influence on interfacial polymerization.

The conventional polyfunctional amine compound, reacting with amine-reactive compound in amine aqueous solution, may be used as the polyfunctional amine compound of the present invention. The example of the polyfunctional amine compound of the present invention includes aromatic diamines, aliphatic diamines, primary cycloaliphatic amines, secondary cycloaliphatic amines, xylene diamines and secondary aromatic amines. The preferable example includes 1,4-phenylenediamine, 1,3-phenylenediamine, 2,5-diaminotoluene, N,N'-diphenylethylene diamine, 4-methoxy-phenylenediamine, or a mixture thereof.

The content of polyfunctional amine compound in amine aqueous solution is 0.1 to 20 wt%, preferably 0.5 to 5 wt%. When the content is less than the above range, it is difficult to form a polyamide active layer. Conversely, when the content exceeds the above range, it leads to low water permeability and remainders of un-reacted polyfunctional amine compound in products.

As described above, the alcohol amine compound forms hydrogen bonds between hydroxyl groups within the alcohol amine compound, and between hydroxyl group of the alcohol amine and the tertiary amine groups within the alcohol amine or the tertiary amine. In addition the tertiary amine groups within the alcohol amine compound act as a catalyst during interfacial polymerization. Therefore, theses properties leads to preparation of a polyamide reverse osmosis composite membrane having high water permeability and enhanced salt rejection rate.

Hereinafter, the method of preparing polyamide reverse osmosis composite membrane will be illustrated in more detail.

### (STEP1) COATING BY AMINE AQUEOUS SOLUTION

First, an amine aqueous solution comprising a polyfunctional amine compound, an alcohol amine compound, a tertiary amine compound and water coats on a porous support.

Here, as the porous support, it uses a conventional polymer material for composite membrane. Preferably, it includes a material such as polysulfone, polyethersulfone, polyimide, polypropylene, polyvinylidene fluoride, polyamide, oR polyetherimide, polyacrylonitrile, polymethylmathacrylate, polyethylene or polyolefine .

Although the pore size and the thickness of the porous support of the present invention are not critical to the present invention, the pore size preferably ranges from 1 to 500 nm and the thickness of the porous support preferably ranges from 25 to 125 µm.

The porous support is coated by amine aqueous solution at least one side or both sides thereon. Here, the amine aqueous solution comprises 0.1 to 20 wt% of the polyfunctional amine compound, 0.1 to 20 wt% of alcohol amine compound, 0.1 to 20 wt% of tertiary amine compound and 40 to 99.7 wt% of water.

The coating method is wet-coating method, such as dip-coating, spin-coating, bar-coating or spray-coating.

### (STEP 2) FORMING POLYAMIDE ACTIVE LAYER

Next, it performs by contacting the previously prepared porous support with an organic solution having an amine-reactive compound to form a polyamide active layer.

The polyamide active layer is prepared by interfacial polymerization, which reacts polyfunctional amine compound in amine aqueous solution with amine-reactive compound in organic solution. When tertiary amine and alcohol amine compounds are added into amine aqueous solution as additives, these tertiary amine groups of tertiary amine and alcohol amine compounds accelerate the reactivity of interfacial polymerization.

The preferable amine-reactive compound, for interfacial reacting with polyfunctional amine compound, includes polyfunctional acylhalide, polyfunctional sulfonylhalide, and polyfunctional isocyanate. More preferable amine-reactive compound includes trimezochloride, terephthaloyl chloride, isophthaloyl chloride, or a mixture thereof.

The content of the amine-reactive compound in organic solution is 0.01 to 10 wt%, preferably 0.05 to 2.0 wt%. When the content is less than the above range, it is difficult to form polyamide active layer. Conversely, when the content exceeds the above range, it leads to low water permeability and remainder of un-reacted polyfunctional amine compound in product.

The conventional organic solvents may be used as organic solvent of the present invention as long as amine-reactive compound solved in those solvents. Preferable solvent includes hexane, cyclohexane, C1-C12 alkanes, chlorinated hydrocarbon such as FREON, or a mixture thereof.

### (STEP 3) DRYING

Next, it carries out drying the porous support having polyamide active layer to form polyamide osmosis composite membrane.

The reasonable drying condition is suit for removing un-reacted materials, water and organic solvent. Preferably, it performs at the temperature of 30-150 °C, optionally under reduced pressure.

Through these steps, it can be prepared the polyamide osmosis composite membrane.

In addition, alcohol amine compound coating on the membrane and drying, or curing is helpful for increasing water permeability and salt rejection rate.

In detail, the water permeability of the membrane can be increased by coating the alcohol amine compound on the previous prepared polyamide osmosis composite membrane and drying it.

As the alcohol amine compound, it uses a conventional alcohol amine compound, preferably the compounds represented by Chemical formula 1 or 2. More preferably, it uses a material selected from the group consisting of N,N,N'N'-tetrakis-(2-hydroxypropyl)- ethylenediamine, N,N,N'N'N"-pentakis-(2-hydroxypropyl)-diethylenetriamine, 1,1'-((3-(dimethylamino)-propyl)-imino)-bis-2-propanol, 2-((2-(dimethylamino)-ethyl)-methylamino)-ethanol, 2-((2-(2-(dimethylamino)-ethoxy)-ethyl)-methylamino)-ethanol and a mixture thereof.

The additional alcohol amine coating method is same to the previous wet coating method in step 1. Preferably, it carries out by dipping porous support having polyamide active layer into bare alcohol amine compound or its aqueous solution at a temperature of 20 to 60 °C for 10 seconds to 1 hour. When the time is less than the above range, the above-mentioned effect are not enough. Conversely, when the time exceeds the above range, it leads to reduce salt rejection rate.

In accordance with the present invention, it is adjusted the concentration of alcohol amine concerning coating method, coating apparatus and the thickness, as desired. For example, the alcohol amine compound can be used for itself, or as an aqueous solution of ranging from 0.01 to below 100 wt%, preferably, 1 to 50 wt% (CONC.).

After coating, it performs by drying thus-obtained membrane at 25 to 85 °C for 10 seconds to 1 hour.

Due to these post-treatments, water permeability of the polyamide reverse osmosis composite membrane can be improved.

In addition, by drying and curing, it can be more enhanced the water permeability as well as salt rejection rate of the membrane.

As the curing goes, it proceeds a partial cross-linking by reacting with the carboxylic group (hydrophilic) in an active layer and hydroxyl group in coating layer (esterification). These partial cross-linking leads to high rigidity of polymer chains in polyamide, and therefore the water permeability and salt rejection rate of the polyamide reverse osmosis composite membrane improve.

In the present of the invention, the curing is carried out at a temperature of ranging from 85 to 150 °C for 10 seconds to 1 hour.

When the temperature is less than the above range, the effect of the cross-linking reaction by the hydroxyl (-OH) group of the alcohol amine compound used as one of the additives in the post-treatment step cannot be obtained, so that the prepared polyamide reverse osmosis composite membrane may experience a reduction in the salt rejection rate while exhibiting a relatively high degree of water flux. Conversely, when the temperature exceeds the above range, the polyamide reverse osmosis composite membrane may shrinks, undesirably resulting in a considerable reduction in water permeability.

When the time is less than the above range, the effect of the hydroxyl (-OH) group of the alcohol amine compound on a surface of the polyamide reverse osmosis composite membrane is negligible, the performance enhancing effect of the polyamide reverse osmosis composite membrane is negligible. Conversely, when the post-treatment time exceeds the above range, the water flux of the polyamide reverse osmosis composite membrane may undesirably decrease due to shrinkage of the polyamide reverse osmosis composite membrane.

Accordingly, in order to prepare polyamide reverse osmosis composite membrane having high water flux and high salt rejection rate at the same, the curing condition is carried out under the above-mentioned conditions.

The polyamide reverse osmosis composite membrane prepared by the above-mentioned has high water permeability and enhanced salt rejection rate, compared to a membrane prepared by conventional method.

Figure 1 is a scanning electron microscopy (SEM) photograph by illustrating a sectional view of a polyamide reverse osmosis composite membrane prepared in Example 1.

Referring to Figure 1, the polyamide reverse osmosis composite membrane (1) comprises a porous support (2); and a polyamide active layer (3) thereon (2). Although Figure 1 shows that the polyamide active layer (3) is located on one side of the porous support (2), the position of polyamide active layer (3) can be both sides on the porous support (2), as desired.

Also, the polyamide reverse osmosis composite membrane has a partial cross-linked interfacial structure by reacting alcohol amine compound with polyamide, which is formed by coating alcohol amine compound on the polyamide active layer of the membrane and curing it.

### Mode for Invention

Preferred Examples of the present invention and Comparative Examples will now be described. The following Examples and Comparative Examples are provided for illustrative purposes only and are in no way intended to limit the scope of the present invention, defined by the claims.

### Examples

### EXAMPLE 1

A porous support prepared by coating a polysuflone polymer solution onto a nonwoven fabric material and subjecting to a phase transition was submerged in a first amine aqueous solution containing 2.0 wt % of meta-phenylenediamine (MPD), 1.5 wt % of 2,2',2"-nitrilotriethanol and 1.0 wt % of triethylamine for 1 minute. Then, an excess solution of the polysulfone support was removed using a rubber roller. The resultant product was submerged in an organic solution having 0.1 wt % of trimesoyl chloride (TMC, ISOPAR^{™} by Exxon) dissolved therein for 10 seconds, and dried at an oven maintained at a temperature of about 95 °C for 3 minutes, thereby preparing a polyamide reverse osmosis composite membrane.

### EXAMPLES 2-10

Polyamide reverse osmosis composite membranes were prepared the same manner as in Example 1, except 2,2',2"-nitrilotriethanol was substituted by alcohol amine compounds in the following Table 1.

**Table 1**

| EXAMPLE | Alcohol amine compounds |
|---|---|
| Example 2 | N,N,N'N'-tetrakis-(2-hydroxypropyl)-ethylenediamine |
| Example 3 | N,N,N'N'-pentakis-(2-hydroxypropyl)-ethylenediamine |
| Example 4 | N-phenyldiethanolamine |
| Example 5 | 2,4,6-tris-(dimethyaminomethyl)-phenol |
| Example 6 | 2-[2-(dimethylamino)-ethoxy]-ethanol |
| Example 7 | 1-(2-hydroxyethyl)-piperidine |
| Example 8 | Tropine |
| Example 9 | N,N-dimethylcyclohexanolamine |
| Example 10 | -((2-(2-(dimethylamino)-ethoxy)-ethyl)-methylamino)-ethanol |

### EXAMPLES 11-13

Polyamide reverse osmosis composite membranes were prepared the same manner as in Example 1, except triethylamine was substituted by tertiary amine compounds in the following Table 2.

**Table 2**

| Examples | Tertiary amine compounds |
|---|---|
| Example 11 | Trimethyl amine |
| Example 12 | Tripropylamine |
| Example 13 | Tributylamine |

### EXAMPLES 14-18

Polyamide reverse osmosis composite membranes were prepared by dipping the prepared membrane in Example 1 into 50 wt% aqueous solution of alcohol amine compounds (as shown in Table 3) at room temperature for 10 minutes, and drying it at 50 °C for 5 minutes.

**TABLE 3**

| Examples | Alcohol amine compounds |
|---|---|
| Example 14 | N,N,N'N'-tetrakis-(2-hydroxypropyl)-ethylenediamine |
| Example 15 | N,N,N'N'-pentakis-(2-hydroxypropyl)-ethylenediamine |
| Example 16 | 1,1'-((3-(dimethylamino)-propyl)-imino)-bis-2-propanol |
| Example 17 | 2-((2-(dimethylamino)-ethyl)-methylamino)-ethanol |
| Example 18 | 2-((2-(2-(dimethylamino)-ethoxy)-ethyl)-methylamino)-ethanot |

### EXAMPLES 19-23

Polyamide reverse osmosis composite membranes were prepared by dipping the prepared membrane in Example 1 into 50 wt% aqueous solution of N,N,N'N'-tetrakis-(2-hydroxypropyl)-ethylenediamine compounds at room temperature for 10 minutes, and further drying it or curing it. The condition of further drying or curing (post-treatment) is shown in the following Table 4:

**Table 4**

| EXAMPLE | Temperature (°C ) | Time (min) |
|---|---|---|
| Example 19 | 25 | 3 |
| Example 20 | 85 | 3 |
| Example 21 | 90 | 3 |
| Example 22 | 95 | 3 |
| Example 23 | 100 | 3 |

### COMPARATIVE EXAMPLE 1

A polyamide reverse osmosis composite membrane was prepared by submerging a polysulfone support in an amine aqueous solution containing 2.0 wt % of MPD, removing the excess amine aqueous solution from a surface of the polysulfone support, and performing an interfacial polymerization on a surface of the resultant product using a "FREON" TF (trichlorotrifluoroethane) solvent having 0.1 wt% of TMC dissolved therein for 10 seconds.

### COMPARATIVE EXAMPLE 2

A polyamide reverse osmosis composite membrane was prepared by submerging a porous polysulfone support in a first amine aqueous solution containing 2.0 wt % of MPD, 2.0 wt % of tetramethylammonium hydroxide (TMAH), and 0.1 wt % of sodium dodecyl benzyl sulfonate (SDBS) for 2 minutes, removing the excess amine aqueous solution, contacting the resultant product with an Isopar C® (Exxon Corp.) solution containing having 0.05 wt % of TMC and 0.075 wt % of IPC dissolved therein, and drying at an oven maintained at a temperature of about 95 °C for 6 minutes.

### COMPARATIVE EXAMPLE 3

A polyamide reverse osmosis composite membrane was prepared by submerging a porous polysulfone support in an amine aqueous solution containing 1.6 wt % of MPD, 0.6 wt % of N,N,N'N'-tetramethyl-1,6-hexanediamine (TMHD), and 0.06 wt % of toluenesulfonic acid (TSA) for 40 seconds, removing the excess amine aqueous solution, and performing an interfacial polymerization reaction with an Isopar C® (Exxon Corp.) organic solution having 0.1 wt % of TMC dissolved therein on a surface of the porous support for 1 minute. The prepared polyamide reverse osmosis composite membrane was dried at room temperature for 1 minute and then rinsed in an aqueous solution containing 0.2 wt % Na₂CO₃ for 30 minutes.

### COMPARATIVE EXAMPLE 4

A polyamide reverse osmosis composite membrane was prepared by submerging a porous polysulfone support in an amine aqueous solution containing 2.0 wt % of MPD, 2.3 wt % of camphosulfonic acid (CSA), 1.1 wt % of triethylamine (TEA), and 2.0 wt % of 2-butoxyethanol (BE) for 40 seconds, removing the excess amine aqueous solution, and then performing an interfacial polymerization with an Isopar C® (Exxon Corp.) organic solution having 0.1 wt % of TMC dissolved therein on a surface of the porous polysulfone support for 1 minute. Then, the prepared polyamide reverse osmosis composite membrane was dried at about 90°C for 3.5 minutes and rinsed in an aqueous solution containing 0.2 wt % Na₂CO₃ for 30 minutes.

### COMPARATIVE EXAMPLE 5

A polyamide reverse osmosis composite membrane was prepared by submerging a porous polysulfone support in an amine aqueous solution containing 2.0 wt % of MPD, 1.0 wt % of 1,4-diazabicyclo-[2,2,2]-octane, and 0.85 wt % of methanesulfonic acid for 40 seconds, and removing the excess amine aqueous solution. Then, an interfacial polymerization reaction was induced between an Isopar C® (Exxon Corp.) organic solution having 0.1 wt % of TMC dissolved therein and a surface of the porous polysulfone support for 1 minute. Then, the prepared polyamide reverse osmosis composite membrane was dried at about 90°C for 3.5 minutes and rinsed in an aqueous solution containing 0.2 wt % Na₂CO₃ maintained at a temperature ranging from about 40 to about 60 °C for 30 minutes.

### COMPARATIVE EXAMPLE 6

A polyamide reverse osmosis composite membrane was prepared by submerging the prepared reverse osmosis membrane (FT-30™ available from FilmTec Corp.) in 100 wt % of a triethanolamine (TEA) aqueous solution and subjected to a post-treatment step at 60°C for 1 hour.

### COMPARATIVE EXAMPLE 7

A porous support was submerged in an aqueous solution containing 3.0 wt % of MPD, 3.0 wt % of N-methyl pyrrolidone (NMP) and 100 ppm of Na₂CO₃, and then contacted with a naphtha solution having 0.1 wt % of TMC dissolved therein, thereby preparing a polyamide reverse osmosis composite membrane through interfacial polymerization.

### COMPARATIVE EXAMPLE 8

A polyamide reverse osmosis composite membrane was prepared by submerging a porous polysulfone support in an amine aqueous solution containing 3.5 wt % of MPD for a predetermined time and removing the excess amine aqueous solution. Then, an interfacial polymerization reaction was induced between a naphtha organic solution having 0.14 wt % of TMC dissolved therein and a surface of the porous polysulfone support. Then, the prepared polyamide reverse osmosis composite membrane was soaked in a 1.0 wt % citric acid solution at room temperature for 15 minutes and rinsed the excess solution for 1 minute for removal. Thereafter, the resultant product was dried at 100°C for 15 minutes.

### COMPARATIVE EXAMPLE 9

A first amine aqueous solution was prepared by dissolving 2.0 wt % of MPD, 0.25 wt % of sodium lauryl sulfate (SLS), 4.0 wt % of CSA, and 2.0 wt % of triethylamine(TEA) in a mixed solution having water and ethanol mixed in a ratio of 80:20. A polyamide reverse osmosis composite membrane was prepared by submerging a porous polysulfone support in the prepared first amine aqueous solution and removing the excess amine aqueous solution. Then, an interfacial polymerization reaction was induced between a hexane solution having 0.1 wt % of TMC and 0.1 wt % of isophthalic chloride (IPC) dissolved therein and a surface of the porous polysulfone support. Then, the prepared polyamide reverse osmosis composite membrane was kept in a hot air dryer at about 120°C for 5 minutes.

### TEST

### Measurement of water flux and salt rejection rate of polyamide reverse osmosis composite membrane

Performance tests of the polyamide reverse osmosis composite membranes prepared in Examples 1 through 23 and Comparative Examples 1 through 9 were carried out through measurements of the water permeability and salt rejection rates thereof by passing an aqueous solution containing 2,000 ppm NaCl through each of the polyamide reverse osmosis composite membranes at 15,5 bar (225 psi) Measurement results are shown below in Table 5.

**Table 5**

| EXAMPLES | Water flux (L/m²hr) | Salt rejection rate (%) |
|---|---|---|
| Example 1 | 75.6 | 97.2 |
| Example 2 | 74.3 | 97.4 |
| Example 3 | 70.5 | 76.5 |
| Example 4 | 60.7 | 96.1 |
| Example 5 | 61.5 | 97.0 |
| Example 6 | 65.1 | 97.2 |
| Example 7 | 68.5 | 96.9 |
| Example 8 | 65.2 | 97.1 |
| Example 9 | 63.2 | 96.8 |
| Example 10 | 66.3 | 96.8 |
| Example 11 | 65.2 | 96.5 |
| Example 12 | 68.0 | 95.7 |
| Example 13 | 65.5 | 96.0 |
| Example 14 | 79.3 | 93.5 |
| Example 15 | 80.5 | 92.7 |
| Example 16 | 75.9 | 94.3 |
| Example 17 | 77.3 | 91.9 |
| Example 18 | 79.0 | 92.0 |
| Example 19 | 79.3 | 93.6 |
| Example 20 | 78.7 | 96.5 |
| Example 21 | 77.9 | 96.9 |
| Example 22 | 79.6 | 97.2 |
| Example 23 | 75.2 | 97.5 |
| Comparative Example 1 | 60.2 | 99.5 |
| Comparative Example 2 | 34.2 | 99.7 |
| Comparative Example 3 | 66.1 | 97.0 |
| Comparative Example 4 | 62.9 | 99.0 |
| Comparative Example 5 | 54.9 | 97.0 |
| Comparative Example 6 | 62.4 | 91.1 |
| Comparative Example 7 | 69.1 | 97.0 |
| Comparative Example 8 | 34.7 | 97.8 |
| Comparative Example 9 | 41.7 | 99.5 |

As can be seen from Table 5, the polyamide reverse osmosis composite membranes according the present invention can be advantageously used for membranes satisfying film requirements including a high degree of water flux and high salt rejection rates.

## Claims

1. An amine aqueous solution comprising polyfunctional amine compound and water for forming an active layer of a polyamide reverse osmosis composite membrane by interfacial-polymerizing the polyfunctional amine with amine reactive compound, **characterized in that** the amine aqueous solution consists of 0.1 to 20 wt % of an polyfunctional amine compound, 0.1 to 20 wt % of an alcohol amine compound, 0.1 to 20 wt% of a tertiary amine compound, and 40 to 99.7 wt% water, wherein the alcohol amine is one selected from the group consisting of 2,2',2"-nitrilotriethanol, 2,2'-ethyliminodiethanol, 2-diethylamino ethanol, 2-diisopropylaminoethanol, N,N,N'N'-tetrakis-(2-hydroxypropyl)-ethylenediamine, N,N,N'N'-tetrakis-(2-hydroxyethyl)-ethylenediamine, N,N,N'N'N"-pentakis-(2-hydroxypropyl)-diethylenetriamine, N-phenyldiethanol amine, 2-(N-ethylanilino)-ethanol, 2,2'-(4-methylphenylimino)-diethanol, 1,1'-((3-(dimethylamino)-propyl)-imino)-bis-2-propanol, N-tert-butyldiethanolamine, bis(2-hydroxyethyl)-amino-tris-(hydroxymethyl)-methane, 2-((2-(dimethylamino)-ethyl)-methylamino)-ethanol, 2-((2-(2-(dimethylamino)-ethoxy)-ethyl)-methylamino)-ethanol, 2,4,6-tris(dimethylaminomethyl)-phenol, 3-dimethylamonophenol, 2-[2-(dimethylamino)-ethoxy]-ethanol, 1-(2-hydroxyethyl)-piperidine, 1-methyl-3-pyrroldiol, 1-aziridinethanol, tropine, N-methyl-3-pipelidinol, 4-(2-hydroxylethyl)-morphorine, 1-(2-hydroxyethyl)-pyrrolidine, 1-methyl-2-pyrrolidinethanol, N-methyl-4-piperidinol, 3-(dimethylamino)-1,2-propanediol, N,N-dimethylcyclohexanol amine, (N,N-dimethyl)-naphthol amine, (N,N-dimethyl)-phenolamine, and a mixture thereof and the tertiary amine compound is one selected from the group consisting of trimethylamine, triethylamine, tripropylamine, tributylamine, and a mixture thereof.

2. A method of preparing a polyamide reverse osmosis composite membrane prepared by interfacial polymerization, comprising the steps of;
(1) coating an amine aqueous solution according to claim 1 on a porous support,
(2) contacting the previously prepared porous support with an organic solution having an amine-reactive compound to form a polyamide active layer on the porous support, wherein the amine-reactive compound is one selected from the group consisting of polyfunctional acylhalide, polyfunctional sulfonyl halide, polyfunctional isocyanate, and a mixture thereof, and
(3) drying it.

3. The method of claim 2, further it performs by coating alcohol amine compound on the polyamide active layer of polyamide reverse osmosis composite membrane, and drying it.

4. The method of claim 2, further it performs by coating alcohol amine compound on a polyamide active layer of polyamide reverse osmosis composite membrane, and curing it.

5. The method of claim 3 or claim 4, wherein the alcohol amine compound is one selected from members represented by formulae (1) or (2) below: 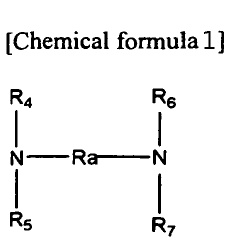 (In the chemical formula 1,
R₄ to R₇ are the same or different, and are each independently a straight or branched alkyl group of C1-C10, aryl group of C6-C10, cycloalkyl group of C3-C10, -XR', or - R"XR"', wherein X is one selected from the group consisting of -O-, -SO₂-, -CO-, -S-, -CF₂-and a combination thereof, and R', R" and R'" are the same or different, and are each independently a straight or branched alkyl group of C1-C10, straight or branched alkylene group of C1-C10, aryl group of C6-C10, cycloalkyl group of C3-C10, or a combination thereof,
Ra is one selected from the group consisting of a straight or branched alkylene group of C1-C10, aryl group of C6-C10, cycloalkyl group of C3-C10, -XR', or -R"XR"', wherein X is one selected from the group consisting of -O-, -SO₂-, -CO-, -S-, -CF₂- and a combination thereof, and R', R" and R"' are the same or different, are each independently a straight or branched alkyl group of C1-C10, straight or branched alkylene group of C1-C10, aryl group of C6-C 10, cycloalkyl group of C3-C10, or a combination thereof,
wherein at least one of R₄ to R₇ is substituted by OH) 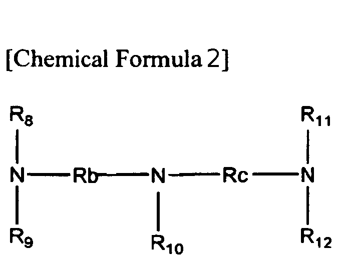 (In the chemical formula 2,
R₈ to R₁₂ are the same or different, are each independently a straight or branched alkyl group of C1-C10, aryl group of C6-C10, cycloalkyl group of C3-C10, -XR', or - R"XR"', wherein X is one selected from the group consisting of -O-, -SO₂- -CO-, -S-, -CF₂-and a combination thereof, and R', R" and R"' are the same or different, are each independently a straight or branched alkyl group of C1-C10, straight or branched alkylene group of C1-C10, aryl group of C6-C10, cycloalkyl group of C3-C10, or a combination thereof,
Rb to Rc are the same or different, are each independently a straight or branched alkylene group of C1-C10, aryl group of C6-C10, cycloalkyl group of C3-C10, -XR', or - R"XR"', wherein X is one selected from the group consisting of -O-, -SO₂-, -CO-, -S-, -CF₂-and a combination thereof, and R', R" and R'" are the same or different, are each independently a straight or branched alkyl group of C1-C10, straight or branched alkylene group of C1-C10, aryl group of C6-C10, cycloalkyl group of C3-C10, or a combination thereof,
wherein at least one of R₈ to R₁₂ is substituted by OH.)

6. The method of claim 3 or claim 4, wherein the alcohol amine compound is one selected from the group consisting of N,N,N'N'-tetrakis-(2-hydroxypropyl)-ethylenediamine, N,N,N'N'-tetrakis-(2-hydroxyethyl)-ethylenediamine, N,N,N'N'N"-pentakis-(2-hydroxypropyl)-diethylenetriamine, 2-((2-(dimethylamino)-ethyl)methylamino)-ethanol, 2-((2-(2-(dimethylamino)-ethoxy)-ethyl)-methylamino)-ethanol and a mixture thereof.

7. The method of claim 3, wherein it performs by dipping the polyamide active layer into the alcohol amine compound or its aqueous solution at a temperature of 20-60 °C for 10 seconds to 1 hour, and drying it at a temperature of ranging from 25 to 85 °C for 10 seconds to 1 hour.

8. The method of claim 4, wherein it performs by dipping the polyamide active layer into the alcohol amine compound or its aqueous solution at a temperature of 20-60 °C for 10 seconds to 1 hour, and curing it at a temperature of ranging from 85 to below 150 °C for 10 seconds to 1 hour.

## Patentansprüche

1. Eine wässerige Amin Lösung, umfassend eine polyfunktionale Aminverbindung und Wasser zur Bildung einer aktiven Schicht einer Polyamid-Umkehrosmose-Verbundmembran durch Grenzflächen-Polymerisation des polyfunktionalen Amins mit einer Amin-reaktiven Verbindung, **dadurch gekennzeichnet, dass** die wässerige Amin Lösung aus 0,1 bis 20 Gewichtsprozent einer polyfunktionalen Aminverbindung, 0,1 bis 20 Gewichtsprozent einer Alkohol-Aminverbindung, 0,1 bis 20 Gewichtsprozent einer tertiären Aminoverbindung und 40 bis 99,7 Gewichtsprozent Wasser besteht, worin das Alkohol-Amin gewählt ist aus der Gruppe bestehend aus 2,2',2"-Nitrilotriethanol, 2,2'-Ethyliminodiethanol, 2-Diethylaminoethanol, 2-Diisopropylaminoethanol, N,N,N',N'-Tetrakis-(2-hydroxypropyl)-ethylendiamin, N,N,N',N'-Tetrakis-(2-hydroxyethyl)-ethylendiamin, N,N,N',N',N"-Pentakis-(2-hydroxypropyl)-diethylentriamin, N-Phenyldiethanolamin, 2-(N-Ethylanilino)-ethanol, 2,2'-(4-Methylphenylimino)-diethanol, 1,1'-((3-(Dimethylamino)-propyl)-imino)-bis-2-propanol, N-tert-Butyldiethanolamin, bis(2-Hydroxyethyl)-amino-tris-(hydroxymethyl)-methan, 2-((2-(Dimethylamino)-ethyl)-methylamino)-ethanol, 2-((2-(2-(Dimethylamino)-ethoxy)-ethyl)-methylamino)-ethanol, 2,4,6-Tris(dimethylaminomethyl)-phenol, 3-Dimethylaminophenol, 2-[2-(Dimethylamino)-ethoxy]-ethanol, 1-(2-Hydroxyethyl)-piperidin, 1-Methyl-3-pyrroldiol, 1-Aziridinethanol, Tropin, N-Methyl-3-piperidinol, 4-(2-Hydroxylethyl)-morphorin, 1-(2-Hydroxyethyl)-pyrrolidin, 1-Methyl-2-pyrrolidinethanol, N-Methyl-4-piperidinol, 3-(Dimethylamino)-1,2-propandiol, N,N-Dimethylcyclohexanolamin, (N,N-Dimethyl)-naphtholamin, (N,N-Dimethyl)-phenolamin und einer Mischung daraus, und die tertiäre Aminverbindung ist gewählt aus der Gruppe bestehend aus Trimethylamin, Triethylamin, Tripropylamin, Tributylamin und einer Mischung daraus.

2. Ein Verfahren zur Herstellung eines Polyamid-Umkehrosmose-Verbundmembran, hergestellt durch Grenzflächenpolymerisation, das die folgenden Schritte umfasst;
(1) Aufschichten einer wässerigen Amin Lösung gemäß Anspruch 1 auf einen porösen Träger,
(2) In Kontakt bringen des zuvor hergestellten porösen Trägers mit einer organischen Lösung, die eine Amin-reaktive Verbindung hat, um eine Polyamid aktive Schicht auf dem porösen Träger zu bilden, worin die Amin-reaktive Verbindung gewählt ist aus der Gruppe bestehend aus polyfunktionalem Acylhalid, polyfunktionalem Sulfonylhalid, polyfunktionalem Isocyanat und einer Mischung daraus, und
(3) Trocken.

3. Das Verfahren gemäß Anspruch 2, bei dem weiter Aufschichten einer Alkohol-Aminverbindung auf die Polyamid aktive Schicht der Polyamid Umkehrosmose-Verbundmembran und Trocknen durchgeführt wird.

4. Das Verfahren gemäß Anspruch 2, bei dem weiter Aufschichten einer Alkohol-Aminverbindung auf eine Polyamid aktive Schicht der Polyamid Umkehrosmose-Verbundmembran und Aushärten durchgeführt wird.

5. Das Verfahren gemäß Anspruch 3 oder Anspruch 4, worin die Alkohol-Aminverbindung gewählt ist aus Elementen dargestellt durch die Formeln (1) oder (2) unten: 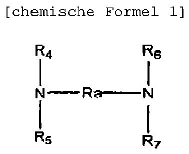 (In der chemischen Formel 1,
sind R₄ bis R₇ gleich oder unterschiedlich und sind jeweils unabhängig eine gerade oder verzweigte Alkylgruppe von C1-C10, eine Arylgruppe von C6-C10, eine Cycloalkylgruppe von C3-C10, -XR' oder -R"XR"', worin X gewählt ist aus der Gruppe bestehend aus -O-, -SO₂-, -CO-, -S-, -CF₂- und einer Kombination daraus, und R', R" und R"' sind gleich oder unterschiedlich und sind jeweils unabhängig einer gerade oder verzweigte Alkylgruppe von C1-C10, eine gerade oder verzweigte Alkylengruppe von C1-C10, eine Arylgruppe von C6-C10, eine Cycloalkylgruppe von C3-C10 oder eine Kombination daraus,
Ra ist gewählt aus der Gruppe bestehend aus einer geraden oder verzweigten Alkylengruppe von C1-C10, einer Arylgruppe von C6-C10, einer Cycloalkylgruppe von C3-C10, -XR' oder -R"XR"', worin X gewählt ist aus der Gruppe bestehend aus -O-, -SO₂-, -CO-, -S-, -CF₂- und einer Kombination daraus, und R', R" und R"' sind gleich oder unterschiedlich, sind jeweils unabhängig eine gerade oder verzweigte Alkylgruppe von C1-C10, eine gerade oder verzweigte Alkylengruppe von C1-C10, eine Arylgruppe von C6-C10, eine Cycloalkylgruppe von C3-C10, oder eine Kombination daraus,
worin mindestens eines von R₄ bis R₇ substituiert ist durch OH) 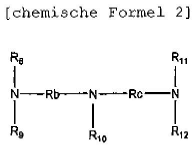 (In der chemischen Formel 2,
sind R₈ bis R₁₂ gleich oder unterschiedlich, sind jeweils unabhängig eine gerade oder verzweigte Alkylgruppe von C1-C10, eine Arylgruppe von C6-C10, eine Cycloalkylgruppe von C3-C10, -XR' oder -R"XR"', worin X gewählt ist aus der Gruppe bestehend aus -O-, -SO₂-, -CO-, -S-, -CF₂- und einer Kombination daraus, und R', R" und R"' sind gleich oder unterschiedlich, sind jeweils unabhängig eine gerade oder verzweigte Alkylgruppe von C1-C10, eine gerade oder verzweigte Alkylengruppe von C1-C10, eine Arylgruppe von C6-C10, eine Cycloalkylgruppe von C3-C10 oder eine Kombination daraus,
R_{b} bis R_{c} sind gleich oder unterschiedlich, sind jeweils unabhängig eine gerade oder verzweigte Alkylengruppe von C1-C10, eine Arylgruppe von C6-C10, eine Cycloalkylgruppe von C3-C10, -XR' oder -R"XR"', worin X gewählt ist aus der Gruppe bestehend aus -O-, -SO₂, -CO-, -S-, -CF₂- und einer Kombination daraus, und R', R" und R"' sind gleich oder unterschiedlich, sind jeweils unabhängig eine gerade oder verzweigte Alkylgruppe von C1-C10, eine gerade oder verzweigte Alkylengruppe von C1-C10, eine Arylgruppe von C6-C10, eine Cycloalkylgruppe von C3-C10 oder eine Kombination daraus,
worin mindestens eines von R₈ bis R₁₂ substituiert ist durch OH.)

6. Das Verfahren gemäß Anspruch 3 oder Anspruch 4, worin die Alkohol-Aminverbindung gewählt ist aus der Gruppe bestehend aus N,N,N',N'-Tetrakis-(2-hydroxypropyl)-ethylendiamin, N,N,N',N'-Tetrakis-(2-hydroxyethyl)-ethylendiamin, N,N,N',N',N"-Pentakis-(2-hydroxypropyl)-diethylentriamin, 2-((2-Dimethylamino)-ethyl)methylamino)-athanol, 2-((2-(2-(Dimethylamino)-ethoxy)-ethyl)-methylamino)-ethanol und einer Mischung daraus.

7. Das Verfahren gemäß Anspruch 3, wobei es durchgeführt wird durch Eintauchen der Polyamid-aktiven Schicht in die Alkohol-Aminverbindung oder in ihre wässerige Lösung bei einer Temperatur von 20-60°C für 10 Sekunden bis zu 1 Stunde und Trocknen bei einer Temperatur in dem Bereich von 25 bis 85°C für 10 Sekunden bis zu 1 Stunde.

8. Das Verfahren gemäß Anspruch 4, wobei es durchgeführt wird durch Eintauchen der Polyamid-aktiven Schicht in die Alkohol-Aminverbindung oder in ihre wässerige Lösung bei einer Temperatur von 20-60°C für 10 Sekunden bis zu 1 Stunde und Aushärten bei einer Temperatur in dem Bereich von 85 bis unter 150°C für 10 Sekunden bis zu 1 Stunde.

## Revendications

1. Solution aqueuse d'amine comprenant un composé amine polyfonctionnel et de l'eau pour former une couche active d'une membrane composite polyamide d'osmose inverse par polymérisation interfaciale de l'amine polyfonctionnelle avec un composé réagissant avec une amine, **caractérisé en ce que** la solution aqueuse d'amine est constitué de 0,1 à 20 % en poids d'un composé amine polyfonctionnel, 0,1 à 20 % en poids d'un composé alcool aminé, 0,1 à 20 % en poids d'un composé amine tertiaire et 40 à 99,7 % en poids d'eau, dans laquelle l'alcool aminé est choisi dans le groupe constitué de 2,2',2"-nitrilotriéthanol, 2,2'-éthyliminodiéthanol, 2-diéthylamino-éthanol, 2-diisopropylaminoéthanol, N,N,N'N'-tétrakis-(2-hydroxypropyl)-éthylènediamine, N,N,N'N'-tétrakis-(2-hydroxyéthyl)-éthylènediamine, N,N,N'N'N"-pentakis-(2-hydroxypropyl)-diéthylènetriamine, N-phényldiéthanol amine, 2-(N-éthylanilino)-éthanol, 2,2'-(4-méthyl-phénylimino)-diéthanol, 1,1'-((3-(diméthylamino)-propyl)-imino)-bis-2-propanol, N-tert-butyldiéthanolamine, bis(2-hydroxéthyl)-amino-tris-(hydroxyméthyl)-méthane, 2-((2-(diméthylamino)-éthyl)-méthylamino)-éthanol, 2-((2-(2-(diméthylamino)-éthoxy)-éthyl)-méthylamino)-éthanol, 2,4,6-tris(diméthylaminométhyl)-phénol, 3-diméthylamonophénol, 2-[2-(diméthylamino)-éthoxyl-éthanol, 1-(2-hydroxyéthyl)-pipéridine, 1-méthyl-3-pyrroldiol, 1-aziridinéthanol, tropine, N-méthyl-3-pipelidinol, 4-(2-hydroxyléthyl)-morphine, 1-(2-hydroxyéthyl)-pyrrolidine, 1-méthyl-2-pyrrolidinéthanol, N-méthyl-4-pipéridinol, 3-(diméthylamino)-1,2-propanediol, N,N-diméthylcyclohexanol amine, (N,N-diméthyl)-naphtol amine, (N,N-diméthyl)-phénolamine, et un mélange de ceux-ci et le composé amine tertiaire est choisi dans le groupe constitué de la triméthylamine, triéthylamine, tripropylamine, tributylamine, et un mélange de ceux-ci.

2. Méthode de préparation d'une membrane composite polyamide d'osmose inverse préparée par polymérisation interfaciale, comprenant les étapes
(1) d'enrobage d'une solution aqueuse d'amine selon la revendication 1 sur un support poreux,
(2) de mise en contact du support poreux précédemment préparé avec une solution organique ayant un composé réagissant avec une amine pour former une couche polyamide active sur le support poreux, dans laquelle le composé réagissant avec une amine est choisi dans le groupe constitué d'un halogénure d'acyle polyfonctionnel, un halogénure de sulfonyle polyfonctionnel, un isocyanate polyfonctionnel et un mélange de ceux-ci, et
(3) de séchage de celui-ci.

3. Méthode de la revendication 2, effectuée en outre par un enrobage d'un composé alcool aminé sur la couche de polyamide active de la membrane composite polyamide d'osmose inverse et son séchage.

4. Méthode de la revendication 2, effectuée en outre par un enrobage d'un composé alcool aminé sur la couche de polyamide active de la membrane composite polyamide d'osmose inverse et sa réticulation.

5. Méthode de la revendication 3 ou 4, dans laquelle le composé alcool aminé est choisi parmi les membres représentés par les formules (1) ou (2) ci-dessous 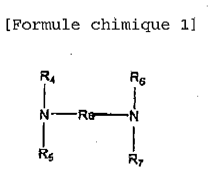 (dans la formule chimique 1,
R₄ à R₇ sont les mêmes ou différents, et sont chacun indépendamment un groupement alkyle alinéaire ou ramifié en C₁-C₁₀, un groupement aryle en C₆-C₁₀, un groupement cycloalkyle en C₃-C₁₀, -XR', ou -R'"XR"', dans lequel X est choisi dans le groupe constitué de -O-, -SO₂-, -CO-, -S-, -CF₂- et une combinaison de ceux-ci, et R', R" et R"' sont les mêmes ou différents, et sont chacun indépendamment un groupement alkyle linéaire ou ramifié en C₁-C₁₀, un groupement alkylène linéaire ou ramifié en C₁-C₁₀, un groupement aryle en C₆-C₁₀, un groupement cycloalkyle en C₃-C₁₀, ou une combinaison de ceux-ci,
Ra est choisi dans le groupe constitué d'un groupement alkylène linéaire ou ramifié en C₁-C₁₀, un groupement aryle en C₆-C₁₀, un groupement cycloalkyle en C₃-C₁₀, -XR', ou -R"XR"', dans lequel X est choisi dans le groupe constitué de -O-, -sO₂-, -CO-, -S-, -CF₂- et une combinaison de ceux-ci, et R', R" et R'" sont les mêmes ou différents, sont chacun indépendamment un groupement alkyle linéaire ou ramifié en C₁-C₁₀, un groupement alkylène linéaire ou ramifié en C₁-C₁₀, un groupement aryle en C₆-C₁₀, un groupement cycloaklyle en C₃-C₁₀, ou une combinaison de ceux-ci,
dans laquelle au moins un des R₄ à R₇ est
substitué par OH) 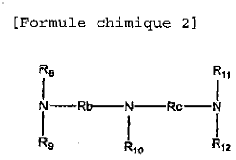 (dans la formule chimique 2,
R₈ à R₁₂ sont les mêmes ou différents, et sont chacun indépendamment un groupement alkyle linéaire ou ramifié en C₁-C₁₀, un groupement aryle en C₆-C₁₀, un groupement cycloalkyle en C₃-C₁₀, -XR', ou -R"XR'", dans lequel X est choisi dans le groupe constitué de -O-, -SO₂-, -CO-, -S-, -CF₂- et une combinaison de ceux-ci, et R', R" et R"' sont les mêmes ou différents, sont chacun indépendamment un groupement alkyle linéaire ou ramifié en C₁-C₁₀, un groupement alkylène linéaire ou ramifié en C₁-C₁₀, un groupement aryle en C₆-C₁₀, un groupement cycloalkyle en C₃-C₁₀ ou une combinaison de ceux-ci,
Rb à Rc sont les mêmes ou différents, sont chacun indépendamment un groupement alkylène linéaire ou ramifié en C₁-C₁₀, un groupement aryle en C₆-C₁₀, un groupement cycloalkyle en C₃-C₁₀, -XR', ou -R"XR'"', dans lequel X est choisi dans le groupe constitué de -O-, -SO₂-, -CO-, -S-, -CF₂- et une combinaison de ceux-ci, et R', R" et R'" sont les mêmes ou différents, sont chacun indépendamment un groupement alkyle linéaire ou ramifié en C₁-C₁₀, un groupement alkylène linéaire ou ramifié en C₁-C₁₀, un groupement aryle en C₆-C₁₀, un groupement cycloalkyl en C₃-C₁₀ ou une combinaison de ceux-ci,
dans lequel au moins un des R₈ à R₁₂ est substitué par OH.)

6. Méthode de la revendication 3 ou de la revendication 4, dans laquelle le composé alcool aminé est choisi dans le groupe constitué de N,N,N'N'-térakis-(2-hydroxypropyl)-éthylènediamine, N,N,N'N'-tétrakis-(2-hydroxyéthyl)-éthylénadiamine, N,N,N'N'N"-pentakis-(2-hydroxypropyl) -diéthylènetriamine, 2-((2-(diméthylamino)-éthyl)méthylamino)-éthanol, 2-((2-(2-(diméthylamino)éthoxy)-éthyl)-méthylamino)-éthanol et un mélange de ceux-ci.

7. Méthode de la revendication 3, laquelle est réalisée en trempant la couche active de polyamide dans le composé alcool aminé ou sa solution aqueuse à une température de 20 à 60°C pendant 10 secondes à 1 heure, et en la séchant à une température allant de 25 à 85°C pendant 10 secondes à 1 heure.

8. Méthode de la revendication 4, laquelle est réalisée en trempant la couche active de polyamide dans le composé alcool aminé ou sa solution aqueuse à une température de 20 à 60°C pendant 10 secondes à 1 heure, et en la réticulant à une température allant de 85°C à moins de 150°C pendant 10 secondes à 1 heure.
